Europäisches Patentamt

European Patent Office

Office européen des brevets

(11) Veröffentlichungsnummer: **0 019 145**

A1

## (12) EUROPÄISCHE PATENTANMELDUNG

(21) Anmeldenummer: **80102327.6**

(22) Anmeldetag: **30.04.80**

(51) Int. Cl.³: **B 23 B 47/28**

(30) Priorität: **15.05.79 DE 2919502**

(43) Veröffentlichungstag der Anmeldung:
**26.11.80 Patentblatt 80/24**

(84) Benannte Vertragsstaaten:
**AT BE CH FR GB IT LI LU NL SE**

(71) Anmelder: **Weitzel, Hans**
**Troppauer Strasse 37**
**D-6300 Giessen(DE)**

(72) Erfinder: **Weitzel, Hans**
**Troppauer Strasse 37**
**D-6300 Giessen(DE)**

(74) Vertreter: **Knefel, Siegfried, Dipl.-Math.**
**Wertherstrasse 16 Postfach 1924**
**D-6330 Wetzlar(DE)**

(54) Vorrichtung zum Verhindern der Drehbewegung der Bohrschraubstöcke und Vorrichtungen an Bohrmaschinen.

(57) Die Anmeldung betrifft eine Vorrichtung (1) zum Auffangen der Drehbewegung des Bohrschraubstockes oder der Bohrvorrichtung an Bohrmaschinen, hervorgerufen durch die Drehung des Bohrers (3) beim Bohrvorgang, bei gleichzeitig einfacher Verlagerung und Einstellung des Werkstückes (4) relativ zum Bohrer (3). Die Werkstückaufnahme ist hierzu an einer Parallelogrammführung (7,8) befestigt. Die Stangen (7) der Parallelogrammführung (7,8) fangen das auf das Werkstück (4) und seine Lagerung vom Bohrer (3) ausgeübte Drehmoment (Md) auf und leiten es über eine Umlenkplatte (8) auf einen am Bohrmaschinentisch (10) angeordneten Befestigungspunkt (6) um.

Fig.1

EP 0 019 145 A1

Hans  W E I T Z E L ,  Troppauer Straße 37, 6300 Giessen

Vorrichtung zum Verhindern der Drehbewegung der Bohrschraubstöcke und Vorrichtungen an Bohrmaschinen

Die Erfindung betrifft eine Vorrichtung, die das Mitnehmen
von Bohrvorrichtungen bzw. Schraubstöcke an Bohrmaschinen
durch den Bohrer verhindert.

In der spanabhebenden Fertigung ist es häufig notwendig, Löcher in Werkstücke zu bohren. Hierzu dienen Bohrmaschinen, wobei das zu bohrende Werkstück meistens in einen Bohr-schraubstock eingespannt wird.
Die Drehbewegung des Bohrers überträgt hierbei eine rotierende Kraft auf das Werkstück, somit auch auf den Bohr-schraubstock. Es ist beim Bohren notwendig, dieser Kraft entgegenzuwirken und deshalb wünschenswert, eine Vorrichtung zu haben, die sich sehr schnell verstellen läßt, d.h. nach allen horizontalen Richtungen verstellbar ist und sich leicht fixieren läßt.

Es ist bekannt, zur Erfüllung dieser Erfordernisse den Bohr-schraubstock auf einen in zwei horizontalen Achsen verstellbaren Kreuztisch zu befestigen.
Die Handhabung einer solchen Einrichtung ist jedoch sehr aufwendig.

W P 496 EU

Ferner ist es bekannt, den Bohrschraubstock auf dem Bohrtisch mittels Spannschrauben nach Ausrichten des Werkstückes zu befestigen. Die Drehbewegung des Bohrschraubstockes kann bei dieser Ausbildung verhindert werden, indem der Schraubstock gegen einen vorher angebrachten Anschlag gelegt wird, der die Rotationskräfte auffängt.

In den meisten Fällen wird jedoch der Bohrschraubstock von Hand festgehalten, um die Drehbewegungen aufzufangen, um die Einstellzeit zu verkürzen. Dies ist die am häufigsten angewandte Methode, insbesondere wenn mehrere Bohrungen in ein und demselben Werkstück an unterschiedlichen Stellen unterzubringen sind und deshalb fortwährend ein neues und schnelles Ausrichten des Werkstückes erforderlich wird.

Die vorgenannten Methoden bringen jedoch erhebliche Nachteile mit sich. In Fällen der direkten Fixierung des Schraubstockes auf dem Bohrtisch ist eine erneute Ausrichtung auf eine andere Bohrstellung relativ schwierig und zeitaufwendig. Aus der Praxis ist es bekannt, daß nach dem Ausrichten eine einwandfreie und genaue Justierung meistens nicht möglich ist.

In der Regel wird deshalb in der Praxis jegliche Sicherheit außer acht gelassen und der Bohrschraubstock lediglich von Hand gegen die Drehbewegung gesichert. Diese Methode birgt jedoch erhebliche Gefahren in sich, d.h. die Rotationskräfte können meistens nicht von Hand ausgeglichen werden, und es kommt zu einer Drehbewegung des Bohrschraubstockes, die zu erheblichen Verletzungen führen kann. Häufig wird bei diesem Verfahren auch das Werkstück zerstört, ebenso treten Schäden am Bohrer, an den Spannvorrichtungen und an der Bohrmaschine auf.

Flexible brauchbare Vorrichtungen zum Verhindern der Drehbewegung der Bohrschraubstöcke an Bohrmaschinen sind nicht
bekannt. Bisher werden lediglich recht schwer zu handhabende Vorrichtungen angeboten, die deshalb nur kurzzeitig benutzt werden und sich als praxisfremd erweisen.

Durch Nichteinhalten der Sicherheitsvorschriften (Festspannen des Bohrschraubstockes) ist es in der Praxis sehr häufig zu schweren Arbeitsunfällen, auch mit tödlichem Ausgang,
gekommen. Durch diese Unfälle und deren Folgen wird der
Volkswirtschaft jährlich ein erheblicher Schaden zugefügt.

Der Erfindung liegt die Aufgabe zugrunde, eine Vorrichtung
zu schaffen, die praxisnah, sehr flexibel ist und dadurch
vom Arbeiter auch angenommen, d.h. benutzt wird, und die
darüber hinaus die notwendige Sicherheit gegen Verletzungen
bietet.

Diese Aufgabe wird durch das kennzeichnende Merkmal des Anspruches 1 gelöst. Bei dieser Ausbildung ist seitlich am
Bohrmaschinentisch an der Außenwange ein Kräfteparallelogramm, zum Beispiel eine Parallelogrammführung, befestigt.
Der Befestigungspunkt dieser Vorrichtung kann etwas hinter
der Arbeitsfläche des Bohrmaschinentisches liegen, um eine
große Bewegungsfreiheit auf diesem zu erhalten. Dieses
Parallelogramm wird mit dem Bohrschraubstock bzw. der Bohrvorrichtung lösbar verbunden. Die Befestigungspunkte am
Bohrschraubstock bzw. an der Bohrvorrichtung können als
Schnellverschluß ausgebildet sein. Der Schnellverschluß
hat den Vorteil, daß beim häufigen Wechseln des Werkstückes
(größere Teile) die Bohrvorrichtung bzw. der Bohrschraubstock problemlos von der Sicherheitsvorrichtung getrennt werden kann. Der Schnellverschluß kann verschiedenartig ausgebildet sein. Zum Beispiel kann eine einfache Steckverbindung vorgesehen sein, welche den Vorteil hat, daß alle Bohrvorrichtungen damit auch nachträglich ausgerüstet werden können.

Die auftretenden Rotationskräfte des Bohrers in der Bohrmaschine werden auf das Werkstück und somit auf den Bohrschraubstock bzw. die Bohrvorrichtung übertragen. Durch die Verbindung des Bohrschraubstockes bzw. der Bohrvorrichtung mit dem Parallelogramm zum Bohrmaschinentisch werden diese Kräfte aufgehoben.

Weitere Einzelheiten der Erfindung können den Unteransprüchen sowie der Zeichnung und deren Beschreibung entnommen werden.

Die mit der Erfindung erzielten Vorteile bestehen insbesondere darin, daß durch die Parallelogrammführung einerseits das auf das Werkstück und dessen Halterung ausgeübte Drehmoment durch die Parallelogrammführung aufgefangen wird, obwohl der Bohrschraubstock bzw. die Bohrvorrichtung nicht fest mit der Sicherheitsvorrichtung verbunden ist, und daß andererseits durch die Parallelogrammführung ein schnelles Verstellen des Werkstückes relativ zum Bohrer möglich ist.

Bei dieser Ausbildung wird die Unfallgefahr beim Bohren an Bohrmaschinen weitgehendst ausgeschlossen.
Ferner läßt sich die erfindungsgemäße Sicherheitsvorrichtung leicht auf jedem Bohrmaschinentisch installieren, so daß auch vorhandene Bohrmaschinen nachträglich umgerüstet werden können.

Die erfindungsgemäße Vorrichtung ist darüber hinaus sehr einfach in ihrem Aufbau und läßt sich deshalb besonders kostengünstig herstellen.
Außerdem ist sie in der Handhabung unkompliziert und dadurch praxisnah.

Auf der Zeichnung ist ein Ausführungsbeispiel der Erfindung dargestellt. Es zeigen:

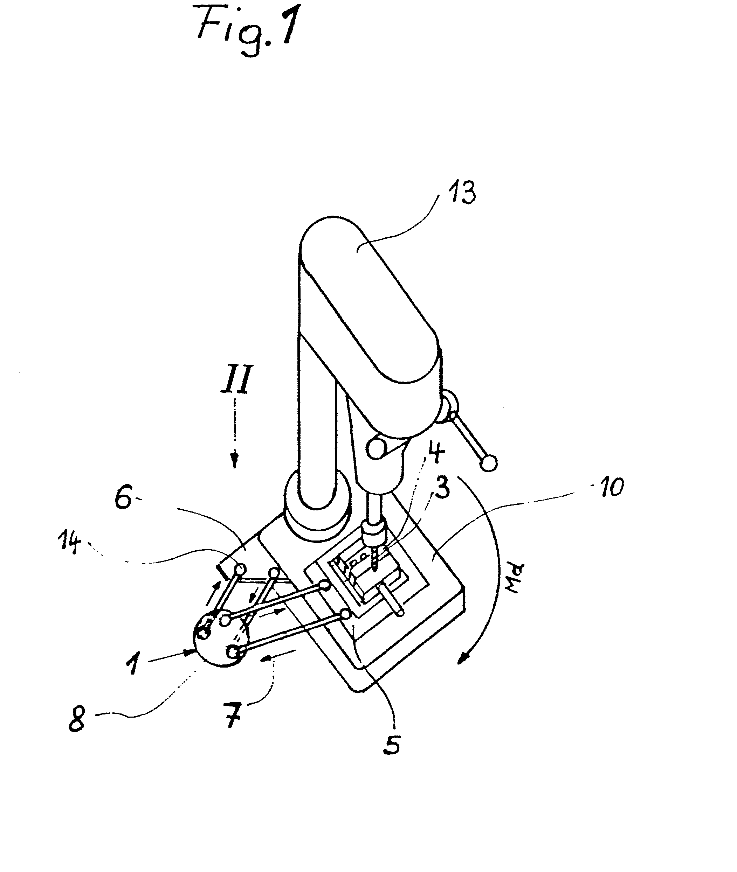

Fig. 1    eine perspektivische Darstellung der Sicherheitsvorrichtung an einer Bohrmaschine;

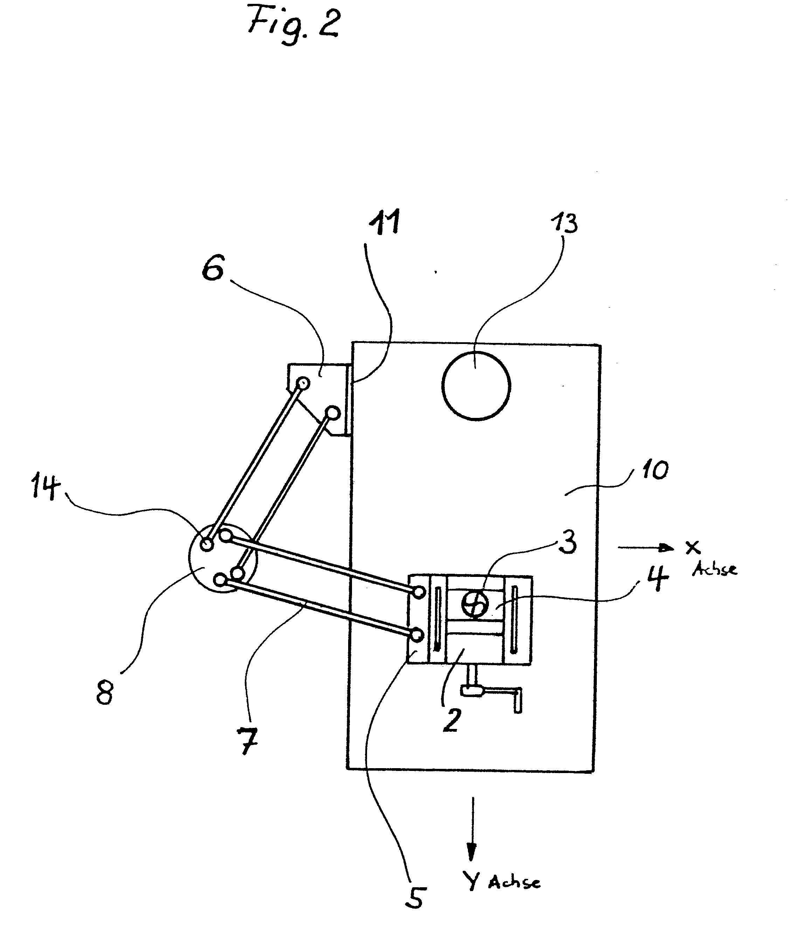

Fig. 2    eine Draufsicht in Richtung des Pfeiles II der Fig. 1.

Die Sicherheitsvorrichtung ist insgesamt mit 1 bezeichnet. Sie ist an einem Befestigungswinkel 6 des Bohrmaschinentisches 10 gelenkig befestigt und trägt andererseits eine Anschlußplatte 5 bzw. eine Anschlußleiste, welche das zu bearbeitende Werkstück mit einer Haltevorrichtung aufnimmt. Der in der Bohrmaschine 13 eingespannte Bohrer 3 ist für die Bearbeitung des Werkstückes 4, welches im Bohrschraubstock bzw. in der Bohrvorrichtung 2 festgespannt ist, bestimmt.

Die Sicherheitsvorrichtung 1 besteht im wesentlichen aus Parallelogrammgestängen 7, die in der Mitte an einem Umlenkkreuz 8, für die Befestigung am Bohrmaschinentisch 10 an dem Befestigungswinkel 6 und für die Befestigung des Bohrschraubstockes an einer Anschlußleiste 5 bzw. Anschlußplatte 5, befestigt ist.

An beiden Enden des Parallelogrammgestänges 7 befinden sich Bohrungen. Durch Nietbolzen 14 oder Schrauben wird das Parallelogrammgestänge 7 mit dem Umlenkkreuz 8, dem Befestigungswinkel 6 und der Anschlußleiste 5 bzw. der Anschlußplatte gelenkig verbunden.

Beim Bohrvorgang überträgt der Bohrer 3 durch seine rechtsdrehende positive Drehbewegung Rotationskräfte auf das in dem Bohrschraubstock bzw. in der Bohrvorrichtung 2 angeordnete Werkstück 4. Die auftretenden Rotationskräfte werden auf das Kräfteparallelogramm 7 über die Umlenkplatte bzw. das Umlenkkreuz 8 auf den Befestigungswinkel 6 umgeleitet. Die auftretenden negativen Drehbewegungen werden von der Anschlußplatte 5 bzw. Befestigungsplatte 5 über das Parallelogramm 7 und über das Umlenkkreuz 8 in umgekehrter Richtung über den Befestigungswinkel 6 zurückgeführt und dann in diesem Punkt neutralisiert.

Patentansprüche

1. Vorrichtung zum Aufnehmen der durch den Bohrer ausgelösten Rotationskräfte, dadurch gekennzeichnet, daß die
auftretenden Rotationskräfte (Md) über ein Kräfteparallelogramm (7) über ein Umlenkkreuz (8) auf einen Neutralisationspunkt (6) (Befestigungspunkt (6), Fixpunkt (6)) übertragen bzw. neutralisiert werden.

2. Vorrichtung nach Anspruch 1, dadurch gekennzeichnet,
daß die Parallelogrammarme (7) einen runden oder andersartigen Querschnitt aufweisen und/oder aus einem Rohr oder
vollem Material bestehen.

3. Vorrichtung nach Anspruch 1, dadurch gekennzeichnet,
daß die Parallelogrammarme (7) am Umlenkkreuz (8) jeweils
paarweise unterhalb bzw. oberhalb des Umlenkkreuzes (8)
mit der Lagerung (14) drehbar befestigt sind.

4. Vorrichtung nach Anspruch 1, dadurch gekennzeichnet,
daß der das eine Ende der Parallelogrammstangen aufnehmende Befestigungswinkel (6), gegebenenfalls unter Zwischenschaltung einer Verlängerung (11), an beliebiger Stelle des Bohrmaschinentisches (10) befestigt ist.

5. Vorrichtung nach Anspruch 1, dadurch gekennzeichnet,
daß die Sicherheitsvorrichtung (1) über ein Befestigungselement (5) mit einer Grundplatte (2) lösbar oder unlösbar
verbunden ist.

6. Vorrichtung nach Anspruch 1, dadurch gekennzeichnet,
daß das Befestigungselement (5) über einen Schnellverschluß mit dem Bohrschraubstock (2) bzw. der Bohrvorrichtung (2) bzw. der Grundplatte (2) verbindbar ist.

7. Vorrichtung nach Anspruch 1, dadurch gekennzeichnet, daß das Umlenkkreuz (8) beliebig geometrische Formen aufweist, insbesondere rund, rechteckig oder quadratisch ist.

8. Vorrichtung nach Anspruch 1, dadurch gekennzeichnet, daß über die Parallelogrammarme (7) und über ein Umlenkkreuz (8) die Kräfte umgelenkt werden.

Kn/s
220480

Fig.1

Fig. 2

Europäisches
Patentamt

**EUROPÄISCHER RECHERCHENBERICHT**

Nummer der Anmeldung

EP 80 10 2327.6

| | **EINSCHLÄGIGE DOKUMENTE** | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| X | US – A – 2 528 909 (E.W. PLUMB) <br> * gesamtes Dokument * <br> -- | 1-4,7, 8 | B 23 B 47/28 |
| | US – A – 2 648 240 (R. PETERS) <br> * Spalte 3, Zeilen 12 bis 32; Fig. 1 * <br> -- | 1 | |
| A | US – A – 2 623 421 (R.E. WILSON,JR.) <br> -- | | |
| A | US – A – 2 276 819 (A.H. BOEHMER) <br> -- | | |
| A | DE – A – 2 030 819 (O. ERDRICH) <br> -- | | **RECHERCHIERTE SACHGEBIETE (Int. Cl.)** |
| A | DE – U – 1 853 062 (E. KARGES) <br> -- | | B 23 B 47/28 <br> B 23 Q 3/02 |
| A | CH – A – 463 308 (SUPFINA WIECK & HENTZEN et al.) <br> -- | | |
| A | US – A – 2 136 140 (A. LANGSNER) <br> ---- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | | |
|---|---|---|
| X | Der vorliegende Recherchenbericht wurde für alle Patentansprüche erstellt. | |
| Recherchenort <br> Berlin | Abschlußdatum der Recherche <br> 31-07-1980 | Prüfer <br> MARTIN |